# EUROPEAN PATENT SPECIFICATION

(11) **EP 3 952 020 B1**
(45) Date of publication and mention of the grant of the patent: **14.06.2023**
(21) Application number: 19721328.3
(22) Date of filing: 27.03.2019
(51) Int. Cl.: H01Q 1/32, B60R 13/02

(54) **ROOF LINING WITH ELECTRONIC MODULE ASSEMBLY FOR VEHICLES AND VEHICLE ROOF ASSEMBLY COMPRISING THE LINING**
GUARNECIDO DE TECHO CON CONJUNTO DE MÓDULO ELECTRÓNICO PARA VEHÍCULOS Y CONJUNTO DE TECHO DE VEHÍCULO COMPRENDIENDO DICHO GUARNECIDO
GARNITURE DE TOIT COMPRENANT UN ENSEMBLE MODULE ÉLECTRONIQUE POUR VÉHICULES ET ENSEMBLE TOIT DE VÉHICULE COMPRENANT LADITE GARNITURE

(43) Date of publication of application: 09.02.2022
(73) Proprietor: Grupo Antolin-Ingenieria, S.A., 09007 Burgos (ES)
(72) Inventor: GONZÁLEZ MERINO, Ricardo Manuel, 09007 BURGOS (ES); ESCUDERO DELGADO, Jesús Vicente, 09007 BURGOS (ES); JORGE MILLÁN, David, 09007 BURGOS (ES); GARCÍA PÉREZ, Óscar, 09007 BURGOS (ES)
(74) Representative: Capitán García, Maria Nuria
(86) International application number: PCT/ES2019/070207
(87) International publication number: WO 2020/193818

(56) References cited:
- WO-A1-2017/178384
- JP-A- 2005 239 133
- US-A- 6 118 410

## Description

### FIELD OF THE INVENTION

The present invention relates to a headliner with an electronic module assembly for vehicles wherein the electronic module generates significant amounts of heat due to the high energy consumption during operation. Additionally, the invention relates to a vehicle roof assembly having said headliner.

### BACKGROUND OF THE INVENTION

It is common to assembly different kinds of electronic modules inside the vehicle in order to perform different functions which contribute to improve the vehicle comfort.

Such functions can be related, for example, to the management the light conditions, environmental conditions, communications or safety of the vehicle.

The use of electronic modules having a lot of functions and particularly functions which requires high energy consumption during operation, is becoming more and more common in the vehicle interior environment. This high energy consumption results in the generation of a large amount of heat by the electronic module in operation.

One of the parameters defining an electronic module is the junction temperature T_{J}.

The junction temperature is defined as a threshold temperature below which is considered that an electronic component works under safe conditions.

Said junction temperature is specified in each particular electronic component datasheet, therefore it is a specific value associated to each electronic component.

Above the junction temperature, an electronic component could have problems to continue to operate properly, meaning that said electronic component could interrupt its functionality, or even worst it can be permanently damaged in the case in which this junction temperature is reached several times.

As an electronic module comprises several electronic components having each of them its own junction temperature, the junction temperature relevant to a specific electronic module is the junction temperature of the electronic component being the lowest of the all junction temperatures corresponding to the electronic components forming said specific electronic module.

Therefore, in order to ensure the proper working of an electronic module, it is necessary having into account that said relevant junction temperature should not be exceeded.

On the other hand, depending on the vehicle area in which the electronic module has to be placed it will be exposed to environmental conditions which can affect the normal operation of the electronic module such as moisture, heat, dust, etc.

Therefore, in order to ensure a correct operation of the electronic module it is very important to design the electronic module and its surroundings accordingly.

In the case in which the electronic module has to be arranged in the vehicle roof area the main issue it is related to the high temperatures to which it will be exposed as a consequence to the solar radiation. So the heat management is one of the main challenges to be addressed.

On the other hand, the purpose of the present invention is to modify as little as possible the surroundings of the headliner with the electronic module wherein it is assembled, particularly the vehicle roof.

The available space between the headliner and the vehicle roof is limited in order to do not penalize the available space in the vehicle passenger compartment.

Therefore, in this case it would be convenient that the relative position of the electronic module in the vehicle roof area is parallel to the vehicle roof main surface.

Taking into account that the vehicle roof is directly exposed to the solar radiation, according to this parallel disposition of the electronic module, it receives a large amount of heat along its entire main surface. Therefore, the problem of the generated heat due to the solar radiation is further aggravated.

Taking into account that the field of the present invention is related to electronic modules which generate a lot of heat in operation, the problem is further aggravated.

In view of the above, it is clear that the management of both, the heat generated by the electronic module in operation by itself and the heat received by the vehicle roof due to the solar radiation, each of one individually, and the combination of them, is the main challenge of the invention.

It is known the patent application WO2012025507 disclosing a proposal to manage the heat present around an electronic module comprising a printed circuit board which is placed in the narrow space between a vehicle roof and a headliner covering the vehicle roof according to a parallel disposition to the vehicle roof.

The solution comprises the addition of a heat conducting device connected to the printed circuit in order to conduct the heat present inside the electronic module to its surroundings. So in this case the heat is dissipated outside the electronic module.

The heat conducting devices arranged for dissipating the heat comprise additional elements connected to the electronic module such as metal fins and a metal plate connected to the electronic module by metal screws.

Therefore, the solution disclosed in WO2012025507 comprises added parts responsible for dissipating the heat generated inside the electronic module projecting around the electronic module.

On the one hand it makes that the electronic module is not a compact component easy to handle and easy to assembly.

On the other hand, the way in which the heat is managed, by dissipation, has some disadvantages.

The dissipation process is slow and in order to carry out an effective dissipation of the heat it is necessary to have a large space in contact with air in which the heat can be evacuated. The space existing between the vehicle roof and the headliner is not enough to evacuate quickly the heat dissipated from the electronic module.

That is why one embodiment of the invention proposes providing the headliner with several openings communicating the space wherein the electronic module is assembled with the passenger compartment. In this way the available space to evacuate the heat is increased.

However, the heat evacuation by the openings provided in the headliner to the passenger compartment is not always desirable, especially in summer time where an elevated amount of heat has to be evacuated. Moreover, the headliner could be unattractive due to the presence of the openings.

On the other hand, WO2012025507 is silent about the way to assembly the electronic module in the vehicle roof area according to a simple way.

In view of the disadvantages mentioned above, the object of the invention is a headliner with an electronic module which allows an efficient heat management according to a compact way and improve and simplify the assembly of the electronic module in the vehicle roof area. The publication JP 2005 239133 A also discloses a headliner for vehicle.

### DESCRIPTION OF THE INVENTION

The present invention is established and characterised by the independent claims, while the dependent claims describe additional features thereof.

Firstly, the assembly of the electronic module on the headliner as a modular component simplifies the assembly process of the electronic module in the vehicle roof area.

Traditionally the electronic module is assembled in the vehicle roof, then the power wiring is connected to the electronic module by the corresponding electric connector. Finally, the headliner is assembled to the vehicle roof.

The present invention simplifies the mounting process of the assembly formed by the electronic module and the headliner by mounting both parts at the same time.

The frame allows the assembly of the electronic module assembly onto the headliner according to a mechanically stable way and to a precise position of both the electronic module assembly as a whole, and each part forming the electronic module individually.

Therefore, the frame is the component which allows linking the electronic module assembly with the headliner in order to enable a modular assembly.

The mechanical protection cap insolates mechanically the electronic module assembly by covering it against the headliner forming in this way a compact package inside of which the components forming the electronic module assembly are housed.

The heat absorbing part comprising a casing which comprises a heat conductive material, and which encloses a phase change material able to absorb the heat of the electronic module. The phase change material has a melting point in the range between 70% of the junction temperature T_{J} of the electronic module and 105% of the junction temperature T_{J} of the electronic module.

According this kind of heat absorbing part, the heat received by the electronic module is absorbed by the phase change material when the material melts, that is when the material changes its phase from solid to liquid.

Taking into account that the heat absorbing part comprises a casing comprising a heat conductive material, the heat absorbing part is continuously absorbing heat from the electronic module when its temperature raises. When the melting point of the phase change material is reached the heat absorbing capacity is significantly increased, stabilizing this way the electronic module temperature providing that it remains heat absorbing capacity in the heat absorbing part, that is until the phase change material is completely melted.

In order to avoid exhausting the heat absorbing capacity of the heat absorbing part too soon it is preferred to choose a phase change material having a melting point as closest as possible to the junction temperature T_{J} of the electronic module.

Taking into account the above it is considered that a phase change material having a melting point in the range above specified is more advantageous.

This way to manage the heat allows absorbing a large amount of heat in a short period of time. It allows managing temperature peaks in order to ensure a proper operation of the electronic module at all times.

On the other hand, the heat absorbing part is in contact with the printed circuit board. Said contact allows improving the heat transfer between the printed circuit board and the phase change material. In addition, said contact allows configuring the whole assembly according to a very compact way.

In the optional case in which the mechanical protection cap comprises a thermal insulating material, the amount of heat received by the electronic module which comes from the solar radiation is reduced.

In the optional case in which the thermal insulating material comprises the same material as the substrate of the headliner, the manufacturing process and the cost of the assembly can be simplified and reduced respectively since that the headliner scrap material is used for manufacturing this part because the headliner is, in itself, a thermal insulating component.

In the optional case in which the mechanical protection cap comprises the heat absorbing part, the packaging formed by the electronic module assembly is even more compact making possible reduce even more the space that it occupies.

In the optional case in which the heat absorbing material is arranged on the first side of the printed circuit board it is possible to achieve a better management of the heat generated by the electronic module by itself in operation.

In the optional case in which the heat absorbing material is arranged on the second side of the printed circuit board it is possible to achieve a better management of the heat comes from the vehicle roof produced by the solar radiation.

In the optional case in which two heat absorbing materials are provided on each side of the printed circuit board it is possible to achieve a better management of both, the heat comes from the vehicle roof produced by the solar radiation and the heat generated by the electronic module by itself in operation.

In the optional case in which the frame is additionally attached to the vehicle roof, both the mechanical stability of the electronic module assembly and the headliner as such, are improved. Therefore, the deformation of the headliner as result of the weight of the electronic module assembly is avoided.

In the optional case in which the electronic module assembly is faced to a plastic cap covering a vehicle roof opening, it is possible to provide an antenna in the second side of the printed circuit board in order to communicate the vehicle with the exterior in such a way that its working is not affected by the metallic material forming the vehicle roof in the event the vehicle roof comprising a metal sheet.

### DESCRIPTION OF THE FIGURES

The present specification is completed by a set of figures that illustrate a preferred embodiment and in no way limit the invention.

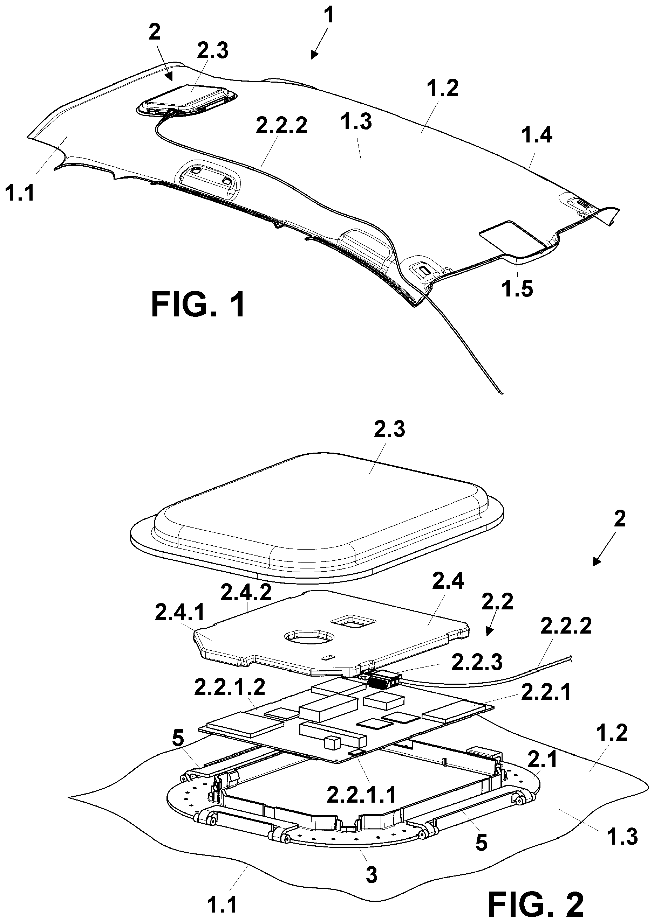

Figure 1 shows a perspective view of the headliner with the electronic module assembly wherein the electric wiring and the mechanical protection cap forming the electronic module assembly can be seen.
Figure 2 shows an explosion view of the electronic module assembly according to a first embodiment in which the electronic module assembly comprises a frame connected to the second side of the headliner, an electronic module comprising a printed circuit board, an electric harness and an electric connector, a heat absorbing part arranged on the second side of the printed circuit board and a mechanical protection cap covering the whole assembly.

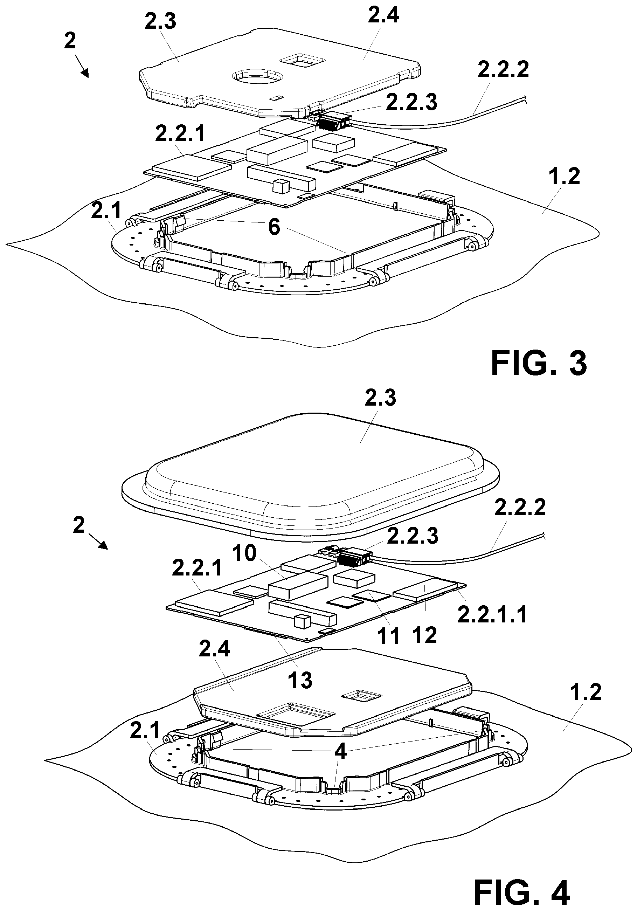

Figure 3 shows an explosion view of the headliner with the electronic module assembly according to a second embodiment in which the electronic module assembly comprises a frame connected to the second side of the headliner, an electronic module comprising a printed circuit board, an electric harness and an electric connector, and a heat absorbing part arranged on the second side of the printed circuit board performing at the same time the functions of both, a heat absorbing part and a mechanical protection cap.
Figure 4 shows an explosion view of the headliner with the electronic module assembly according to a third embodiment in which the electronic module assembly comprises a frame connected to the second side of the headliner, an electronic module comprising a printed circuit board, an electric harness and an electric connector, a heat absorbing part arranged on the first side of the printed circuit board and a mechanical protection cap covering the whole assembly.

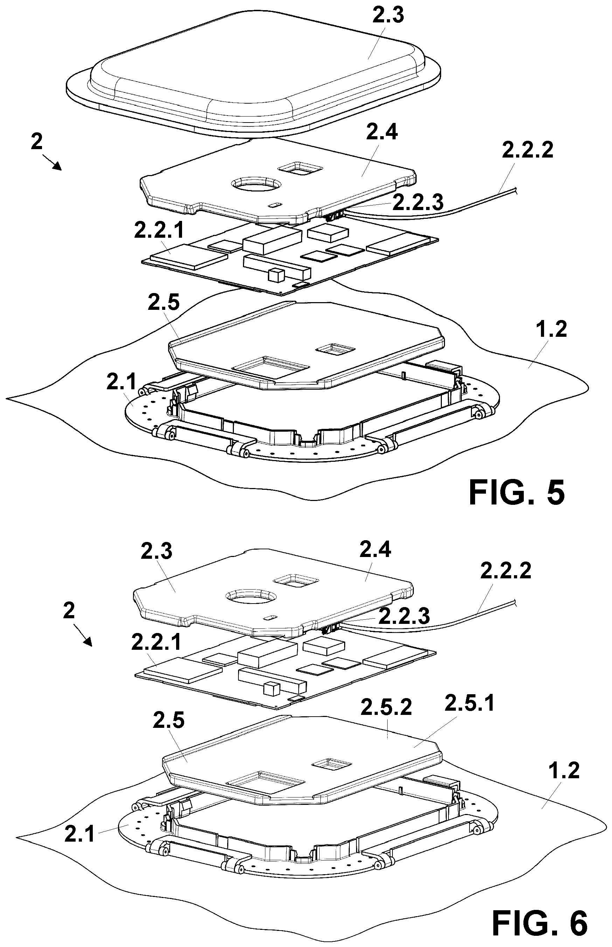

Figure 5 shows an explosion view of the headliner with the electronic module assembly according to a forth embodiment in which the electronic module assembly comprises a frame connected to the second side of the headliner, an electronic module comprising a printed circuit board, an electric harness and an electric connector, a heat absorbing part arranged on the second side of the printed circuit board, a further heat absorbing part arranged on the first side of the printed circuit board, and a mechanical protection cap covering the whole assembly.
Figure 6 shows an explosion view of the headliner with the electronic module assembly according to a fifth embodiment in which the electronic module assembly comprises a frame connected to the second side of the headliner, an electronic module comprising a printed circuit board, an electric harness and an electric connector, a heat absorbing part arranged on the second side of the printed circuit board, a further heat absorbing part arranged on the first side of the printed circuit board, wherein the heat absorbing part arranged on the second side of the printed circuit board performs at the same time the functions of both, a heat absorbing part and a mechanical protection cap.

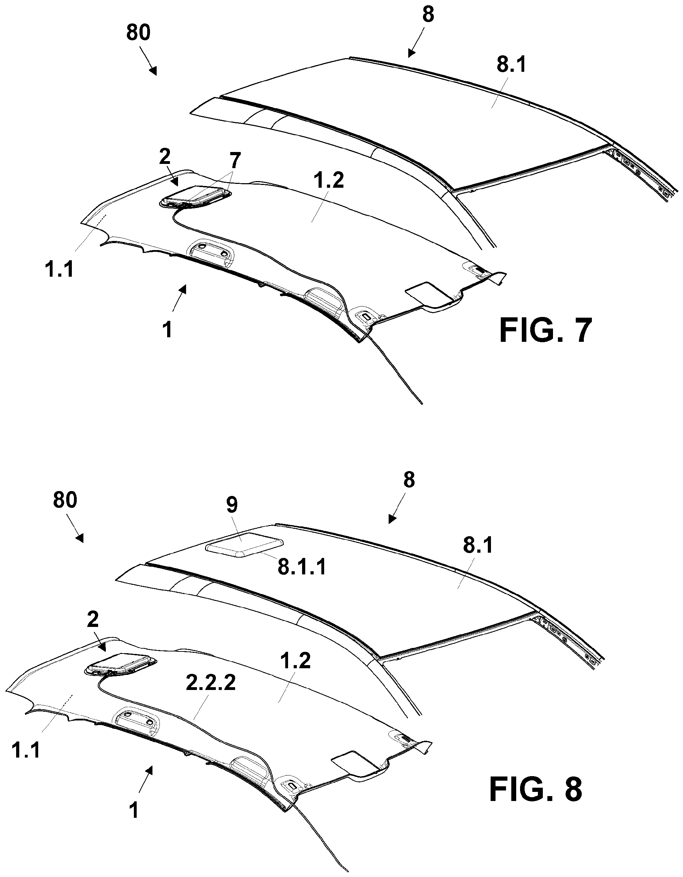

Figure 7 shows a perspective view of the headliner with the electronic module assembly facing to the vehicle roof.
Figure 8 shows a perspective view of the headliner with the electronic module assembly facing to the vehicle roof wherein the vehicle roof comprising an opening covered by a plastic cap.

### DETAILED DESCRIPTION OF THE INVENTION

Figure 1 shows a headliner (1) having a first side (1.1), configured for facing a vehicle interior in use and a second side (1.2) configured for facing a vehicle roof (8) in use.

The headliner (1) is in use when it is assembled inside the vehicle interior and it covers the vehicle roof (8).

The headliner (1) comprises a main surface (1.3) defined by the width and the length of the headliner (1) .

The headliner (1) comprises an electronic module assembly (2) on the second side (1.2) of the headliner (1). In this way when the headliner (1) is in use, the electronic module assembly (2) is not seen in the vehicle interior by the passengers.

The electronic module assembly (2) comprises:
o a frame (2.1),
o an electronic module (2.2) comprising a printed circuit board (2.2.1), an electric wiring (2.2.2) and an electric connector (2.2.3),
∘ a heat absorbing part (2.4) comprising a casing (2.4.1) which encloses a phase change material (2.4.2),
o a mechanical protection cap (2.3).

The frame (2.1) is the component which allows linking the electronic module assembly (2) with the headliner (1) in order to enable a modular assembly.

As it has been discussed above, the frame (2.1) allows the assembly of the electronic module assembly (2.2) onto the headliner (1) according to a mechanically stable way and to a precise position of both the electronic module assembly (2.2) as a whole, and each part forming the electronic module assembly (2.2) individually.

The frame (2) can be formed by a single part or by several joined parts forming a frame for example according a square shape.

The part or parts forming the frame (2.1) can be for example a L-shaped profile, U-shaped profile, C-shaped profile, etc.

The frame (2.1) can be formed by a plastic or metal material.

The frame (2.1) is connected to the second side (1.2) of the headliner (1) by first attaching means (3).

The first attaching means (3) preferably comprises an adhesive, however other attaching means such as screws or clips can be used.

The electronic module (2.2) comprising a printed circuit board (2.2.1), an electric wiring (2.2.2) and an electric connector (2.2.3).

The printed circuit board (2.2.1) is arranged parallel to the main surface (1.3) of headliner (1). It comprises a first side (2.2.1.1) facing the headliner (1) and a second side (2.2.1.2) opposite to the first side (2.2.1.1).

The printed circuit board (2.2.1) comprises several electronic components (10, 11, 12, 13) in order to perform the function for which it has been designed.

According to a particular case, the printed circuit board (2.2.1) comprises an antenna (10) placed on its second side (2.2.1.2) configured to communicate the vehicle with the vehicle exterior.

In this particular case it will be necessary to adapt slightly the part of the vehicle roof (8) facing the antenna (10) in order to ensure a proper operation of said antenna (10). In the text below some examples are described.

The printed circuit board (2.2.1) is connected to the frame (2.1) by second attaching means (4). The second attaching means (4) can comprise for example clips, snap fit connectors, etc.

The frame (2.1) can comprises a specific geometry which allows positioning and fixing the printed circuit board (2.2.1) in the frame (2.1).

In order to electrically connect the printed circuit board (2.2.1) with the main vehicle electronics (not represented), the electronic module (2.2) also comprises an electric wiring (2.2.2) and an electric connector (2.2.3) placed on the printed circuit board (2.2.1).

As it explained above, the frame (2.1) can comprise a specific geometry particularly designed to position and fix the electric connector (2.2.3) according to a position in which the connexion of the electric wiring (2.2.2) with the main vehicle electronics is facilitated.

The electronic module (2.2) has a junction temperature T_{J}. As it has been discussed above, this temperature is a specific value associated to each electronic module and it will depend on the particular electronic components forming part of said electronic module (2.2), and more particularly forming part of the printed circuit board (2.2.1) of said electronic module (2.2) .

As the electronic module (2.2) comprises several electronic components (10, 11, 12, 13), the junction temperature T_{J} of the electronic module (2.2) corresponds with the junction temperature T_{J} of one particular electronic component (10, 11, 12, 13) forming part of the electronic module (2.2) having the lowest junction temperature of all the electronic components (10, 11, 12, 13) forming the electronic module (2.2).

The heat absorbing part (2.4) comprises a casing (2.4.1) which encloses the phase change material (2.4.2) in order to contain said phase change material (2.4.2) when it melts, that is, when it changes its phase, from solid to liquid.

Particularly, the casing (2.4.1) comprising a heat conductive material having a thermal conductivity higher than 0.1 W/m.K.

According to a particular case the casing (2.4.1) is made of a plastic material. The casing (2.4.1) can be rigid or flexible.

In any case, the casing (2.4.1) is configured in such a way that the heat absorbing part (2.4) is in contact, at least partly, with the printed circuit board (2.2.1) in order to favoured the heat transfer between both parts (2.2.1, 2.4).

This contact can be a direct contact in such a way that the heat absorbing part (2.4) directly contacts at least some of the electronic components (10, 11, 12, 13) forming the printed circuit board (2.2.1), or can be an indirect contact in such a way that an additional element, such as a metallic component is arranged between the heat absorbing part (2.4) and the printed circuit board (2.2.1) in order to improve the heat transfer between both components (2.4, 2.2.1).

The phase change material (2.4.2) of the invention is a liquid-solid phase change material. In the solid phase, it absorbs large amounts of heat until all the material is melted, that is, until it is transformed to the liquid phase. When the temperature around the printed circuit board (2.2.1) falls, the phase change material (2.4.2) solidifies, releasing its stored latent heat.

Taking into account that the electronic module (2.2) has a junction temperature T_{J} above which it could have problems to continue to operate properly, the phase change material (2.4.2) has a melting point in the range between 70% of the junction temperature T_{J} of the electronic module (2.2) and 105% of the junction temperature T_{J} of the electronic module (2.2).

According to a preferred particular case, as it is shown in figure 4, the heat absorbing part (2.4) is arranged on the first side (2.2.1.1) of the printed circuit board (2.2.1).

According to another particular case, as it is shown in figures 2 or 3, the heat absorbing part (2.4) is arranged on the second side (2.2.1.2) of the printed circuit board (2.2.1).

According to another particular case, as it is shown in figures 5 and 6, the heat absorbing part (2.4) is arranged on the second side (2.2.1.2) of the printed circuit board (2.2.1) and a further heat absorbing part (2.5) is arranged in contact with the first side (2.2.1.1) of the printed circuit board (2.2.1).

Preferably, the further heat absorbing part (2.5) comprises the same technical features, such as the heat absorbing part (2.4) above described. Therefore, it comprises a further casing (2.5.1) comprising a heat conductive material having a thermal conductivity higher than 0.1 W/m.K, and a further phase change material (2.5.2) having a melting point in the range between 70% of the junction temperature T_{J} and 105% of the junction temperature T_{J} of the electronic module (2.2).

Both, the heat absorbing part (2.4) and the further heat absorbing part (2.5) can be attached to the frame (2.1) by the forth attachment means (6).

The mechanical protection cap (2.3) is arranged as the outer component of the electronic module assembly (2) and it covers the components forming the electronic module assembly (2) being between said mechanical protection cap (2.3) and the headliner (1) in such a way that they are mechanically protected from vibrations and impacts.

Additionally, in the optional case in which the mechanical protection cap (2.3) comprises a thermal insulating material, this part mitigates the heat coming from the solar radiation. In this way the heat received by the electronic module (2.2) is significantly reduced since this thermal insulating part is facing the vehicle roof (8).

According to an optional case, the thermal insulating material is the same material as the substrate (1.4) of the headliner (1).

Taking into account that the headliner (1) comprises a substrate (1.4) and decorative layer (1.5), and the material of the substrate (1.4) is a thermal insulating material by itself, the scrap material, for example took from an opening provided on the substrate (1.4) for mounting a light console, is used to configure the mechanical protection cap (2.3).

According to an optional case, as it is shown in figures 3 and 6, the mechanical protection cap (2.3) comprises the heat absorbing part (2.4). In this case, the same part is able to perform at least the main function of the mechanical protection cap (2.3) and the main function of the heat absorbing part (2.4).

For example, in this case the casing (2.4.1) which encloses the phase change material (2.4.2) can be formed by a rigid material which is able to protect mechanically the rest of the parts forming the electronic module assembly (2).

According to an optional case, the mechanical protection cap (2.3) is connected to the frame (2.1) by third attachment means (5).

The third attaching means (5) can be clips, screws or adhesive. The particular configuration of the third attaching means (5) will depend on the weight of the electric module assembly (2) and its electronic performance.

According to an optional case, as it is shown in figures 7 and 8, in order to better control the deformation of the headliner (1) due to the weight of the electronic module assembly (2), the frame (2.1) comprises fifth attachment means (7) configured to attach the frame (2.1) to a vehicle roof (8).

As it shown in figures 7 and 8, the present invention also relates to a vehicle roof assembly (80) comprising:
- a vehicle roof (8). The vehicle roof (8) comprises a vehicle roof sheet (8.1) attached to the structural beams forming the chassis of the vehicle roof (8). It can be made of metal material, plastic material or fibre-reinforced composite material.
- a headliner (1) with an electronic module assembly (2) for vehicles according to the above described technical features.

In the particular case in which the roof sheet (8.1) is a metal sheet, as it is shown in figure 8, it can comprise an opening (8.1.1) facing the electronic module assembly (2). The opening (8.1.1) is covered by a plastic cap (9). Thus the plastic cap (9) is arranged above the electronic module assembly (2).

As it has been described above, according to an optional case, the electronic module assembly (2) is additionally attached to the vehicle roof (8).

In this particular case there are the following cases, a case in which the electronic module assembly (2) is attached to the vehicle roof sheet (8.1) around the roof opening (8.1.1), a case in which the electronic module assembly (2) is attached to the plastic cap (9), or a case in which the electronic module assembly (2) is attached to both parts.

As it has been explained above, the electronic module assembly (2) can be attached to the vehicle roof (8) by fifth attachment means (7) configured to attach the frame (2.1) to the vehicle roof (6) according to any of the particular cases described in the previous paragraph.

According to a particular case, the electronic module (2.2), and particularly the printed circuit board (2.2.1), comprises an antenna (10) placed on its second side (2.2.1.2) configured to communicate the vehicle with the vehicle exterior.

In order to ensure a proper operation of said antenna (10), this particular case can be combined with a roof sheet (8.1) made of non-metallic materials, or in the case in which the roof sheet (8.1) is made of a metallic material, an opening (8.1.1) covered by a plastic cap (9) is arranged facing the electronic module assembly (2).

## Claims

1. Headliner (1) with electronic module assembly (2) for vehicles comprising:
• a headliner (1) comprising a first side (1.1) configured for facing a vehicle interior in use, and a second side (1.2) configured for facing a vehicle roof in use, wherein the headliner (1) comprises a main surface (1.3),
• an electronic module assembly (2) having:
o a frame (2.1) connected to the second side (1.2) of the headliner (1) by first attaching means (3),
o an electronic module (2.2) comprising:
▪ a printed circuit board (2.2.1) connected to the frame (2.1) by second attaching means (4) wherein the printed circuit board (2.2.1) is arranged parallel to the main surface (1.3) of the headliner (1) and wherein the printed circuit board (2.2.1) comprises a first side (2.2.1.1) facing the headliner (1) and a second side (2.2.1.2) opposite to the first side (2.2.1.1),
▪ an electric wiring (2.2.2) and an electric connector (2.2.3) configured to connect the printed circuit board (2.2.1) to a main vehicle electronics,
wherein the electronic module (2.2) has a junction temperature T_{J},
o a heat absorbing part (2.4) which comprises a casing (2.4.1) comprising a heat conductive material having a thermal conductivity higher than 0.1 W/m.K, and a phase change material (2.4.2) having a melting point in the range between 70% of the junction temperature T_{J} and 105% of the junction temperature T_{J}, wherein the heat absorbing part (2.4) is in contact with the printed circuit board (2.2.1), and wherein the casing (2.4.1) encloses the phase change material (2.4.2),
o a mechanical protection cap (2.3) arranged as the outer component of the electronic module assembly (2), wherein said mechanical protection cap (2.3) covers the components forming the electronic module assembly (2) being between said mechanical protection cap (2.3) and the headliner (1).

2. Headliner (1) with electronic module assembly (2) for vehicles according to claim 1 wherein the mechanical protection cap (2.3) comprises a thermal insulating material.

3. Headliner (1) with electronic module assembly (2) for vehicles according to claim 2 wherein the headliner (1) comprises a substrate (1.4) and decorative layer (1.5), and wherein the thermal insulating material of the mechanical protection cap (2.3) comprises the same material as the substrate (1.4) of the headliner (1) .

4. Headliner (1) with electronic module assembly (2) for vehicles according to claim 1 wherein the heat absorbing part (2.4) comprises the mechanical protection cap (2.3).

5. Headliner (1) with electronic module assembly (2) for vehicles according to claim 1 wherein the heat absorbing part (2.4) is arranged on the first side (2.2.1.1) of the printed circuit board (2.2.1).

6. Headliner with electronic module assembly for vehicles according to claim 1 wherein the heat absorbing part (2.3) is arranged on the second side (2.2.1.2) of the printed circuit board (2.2.1).

7. Headliner (1) with electronic module assembly (2) for vehicles according to any claim 1 wherein the heat absorbing part (2.4) is arranged on the second side (2.2.1.2) of the printed circuit board (2.2.1) and a further heat absorbing part (2.5) is in contact with the first side (2.2.1.1) of the printed circuit board (2.2.1).

8. Headliner (1) with electronic module assembly (2) for vehicles according to claim 7 wherein the further heat absorbing part (2.5) comprises a further casing (2.5.1) comprising a heat conductive material having a thermal conductivity higher than 0.1 W/m.K, and a further phase change material (2.5.2) having a melting point in the range between 70% of the junction temperature (T_{J}) and 105% of the junction temperature (T_{J}), wherein the casing (2.5.1) encloses the further phase change material (2.5.2).

9. Headliner (1) with electronic module assembly (2) for vehicles according to any of the preceding claims, wherein the mechanical protection cap (2.3) is connected to the frame (2.1) by third attachment means (5) .

10. Headliner (1) with electronic module assembly (2) for vehicles according to any of the preceding claims, wherein the frame (2.1) comprises fifth attachment means (7) configured to attach the frame (2.1) to a vehicle roof (8).

11. Vehicle roof assembly (80) comprising:
a vehicle roof (8),
a headliner (1) with electronic module assembly (2) for vehicles according to any of the preceding claims.

12. Vehicle roof assembly (80) according to claim 11 wherein the vehicle roof (8) comprises a roof sheet (8.1) made of metal and the roof sheet (8.1) comprises a roof opening (8.1.1) covered by a plastic cap (9) arranged above the electronic module assembly (2) when the vehicle roof assembly (80) is in use.

13. Vehicle roof assembly (80) according to claim 12 wherein the electronic module assembly (2) is attached to the vehicle roof sheet (8.1) around the roof opening (8.1.1), or the electronic module assembly (2) is attached to the plastic cap (9), or the electronic module assembly (2) is attached to both parts.

14. Vehicle roof assembly (80) according to any claims 12 or 13 wherein the electronic module (2.2) comprises an antenna (10) configured to communicate the vehicle with the vehicle exterior and wherein the antenna (10) is arranged on the second side (2.2.1.2) of the printed circuit board (2.2.1).

## Patentansprüche

1. Dachhimmel (1) mit elektronischer Modulanordnung (2) für Fahrzeuge umfassend:
• einen Dachhimmel (1), der eine erste Seite (1.1), die gestaltet ist, um in Gebrauch einem Fahrzeuginnenraum zugewandt zu sein, und eine zweite Seite (1.2) umfasst, die gestaltet ist, um in Gebrauch einem Fahrzeugdach zugewandt zu sein, wobei der Dachhimmel (1) eine Hauptfläche (1.3) umfasst,
• eine elektronische Modulanordnung (2) einschließlich:
o eines Rahmens (2.1), der durch ein erstes Befestigungsmittel (3) mit der zweiten Seite (1.2) des Dachhimmels (1) verbunden ist,
o eines elektronischen Moduls (2.2) umfassend:
▪ eine mit dem Rahmen (2.1) durch ein zweites Befestigungsmittel (4) verbundene Leiterplatte (2.2.1), wobei die Leiterplatte (2.2.1) parallel zur Hauptfläche (1.3) des Dachhimmels (1) angeordnet ist und wobei die Leiterplatte (2.2.1) eine dem Dachhimmel (1) zugewandte erste Seite (2.2.1.1) und eine der ersten Seite (2.2.1.1) entgegengesetzte zweite Seite (2.2.1.2) umfasst,
▪ eine elektrische Verdrahtung (2.2.2) und ein elektrisches Verbindungselement (2.2.3), das gestaltet ist, um die Leiterplatte (2.2.1) mit einer Hauptfahrzeugelektronik zu verbinden,
wobei das Elektronikmodul (2.2) eine Sperrschichttemperatur T_{J} aufweist,
o einen wärmeabsorbierenden Teil (2.4), der ein Gehäuse (2.4.1) umfasst, das ein wärmeleitendes Material mit einer Wärmeleitfähigkeit von über 0,1 W/m.K und ein Phasenwechselmaterial (2.4.2) mit einem Schmelzpunkt im Bereich zwischen 70 % der Sperrschichttemperatur T_{J} und 105 % der Sperrschichttemperatur T_{J} umfasst, wobei der wärmeabsorbierende Teil (2.4) mit der Leiterplatte (2.2.1) in Kontakt steht und wobei das Gehäuse (2.4.1) das Phasenwechselmaterial (2.4.2) umschließt,
∘ eine als äußere Komponente der elektronischen Modulanordnung (2) angeordnete mechanische Schutzkappe (2.3), wobei die mechanische Schutzkappe (2.3) die die elektronische Modulanordnung (2) bildenden Komponenten zwischen der mechanischen Schutzkappe (2.3) und dem Dachhimmel (1) bedeckt.

2. Dachhimmel (1) mit elektronischer Modulanordnung (2) für Fahrzeuge nach Anspruch 1, wobei die mechanische Schutzkappe (2.3) ein wärmeisolierendes Material umfasst.

3. Dachhimmel (1) mit elektronischer Modulanordnung (2) für Fahrzeuge nach Anspruch 2, wobei der Dachhimmel (1) ein Substrat (1.4) und eine dekorative Schicht (1.5) umfasst und wobei das wärmeisolierende Material der mechanischen Schutzkappe (2.3) aus dem gleichen Material besteht wie das Substrat (1.4) des Dachhimmels (1).

4. Dachhimmel (1) mit elektronischer Modulanordnung (2) für Fahrzeuge nach Anspruch 1, wobei der wärmeabsorbierende Teil (2.4) die mechanische Schutzkappe (2.3) umfasst.

5. Dachhimmel (1) mit elektronischer Modulanordnung (2) für Fahrzeuge nach Anspruch 1, wobei der wärmeabsorbierende Teil (2.4) auf der ersten Seite (2.2.1.1) der Leiterplatte (2.2.1) angeordnet ist.

6. Dachhimmel mit elektronischer Modulanordnung für Fahrzeuge nach Anspruch 1, wobei der wärmeabsorbierende Teil (2.3) auf der zweiten Seite (2.2.1.2) der Leiterplatte (2.2.1) angeordnet ist.

7. Dachhimmel (1) mit elektronischer Modulanordnung (2) für Fahrzeuge nach Anspruch 1, wobei der wärmeabsorbierende Teil (2.4) auf der zweiten Seite (2.2.1.2) der Leiterplatte (2.2.1) angeordnet ist und ein weiterer wärmeabsorbierender Teil (2.5) mit der ersten Seite (2.2.1.1) der Leiterplatte (2.2.1) in Kontakt steht.

8. Dachhimmel (1) mit elektronischer Modulanordnung (2) für Fahrzeuge nach Anspruch 7, wobei der weitere wärmeabsorbierende Teil (2.5) ein weiteres Gehäuse (2.5.1) umfasst, das ein wärmeleitendes Material mit einer Wärmeleitfähigkeit von über 0,1 W/m.K und ein weiteres Phasenwechselmaterial (2.5.2) mit einem Schmelzpunkt im Bereich zwischen 70 % der Sperrschichttemperatur (T_{J}) und 105 % der Sperrschichttemperatur (T_{J}) umfasst, wobei das Gehäuse (2.5.1) das weitere Phasenwechselmaterial (2.5.2) umschließt.

9. Dachhimmel (1) mit elektronischer Modulanordnung (2) für Fahrzeuge nach einem der vorhergehenden Ansprüche, wobei die mechanische Schutzkappe (2.3) durch ein drittes Befestigungsmittel (5) mit dem Rahmen (2.1) verbunden ist.

10. Dachhimmel (1) mit elektronischer Modulanordnung (2) für Fahrzeuge nach einem der vorhergehenden Ansprüche, wobei der Rahmen (2.1) ein fünftes Befestigungsmittel (7) umfasst, das gestaltet ist, um den Rahmen (2.1) an einem Fahrzeugdach (8) zu befestigen.

11. Fahrzeugdachanordnung (80) umfassend:
ein Fahrzeugdach (8),
einen Dachhimmel (1) mit elektronischer Modulanordnung (2) für Fahrzeuge nach einem der vorhergehenden Ansprüche.

12. Fahrzeugdachanordnung (80) nach Anspruch 11, wobei das Fahrzeugdach (8) ein Dachblech (8.1) aus Metall umfasst und das Dachblech (8.1) eine Dachöffnung (8.1.1) umfasst, die durch eine Kunststoffkappe (9) abgedeckt ist, die oberhalb der Elektronikmodulanordnung (2) angeordnet ist, wenn sich die Fahrzeugdachanordnung (80) in Gebrauch befindet.

13. Fahrzeugdachanordnung (80) nach Anspruch 12, wobei die Elektronikmodulanordnung (2) um die Dachöffnung (8.1.1) herum an der Fahrzeugdachplatte (8.1) befestigt ist oder die Elektronikmodulanordnung (2) an der Kunststoffkappe (9) befestigt ist oder die Elektronikanordnung (2) an beiden Teilen befestigt ist.

14. Fahrzeugdachanordnung (80) nach einem der Ansprüche 12 oder 13, wobei das elektronische Modul (2.2) eine Antenne (10) umfasst, die gestaltet ist, um die Fahrzeugkommunikation mit der Fahrzeugaußenseite zu verbinden, und wobei die Antenne (10) auf der zweiten Seite (2.2.1.2) der Leiterplatte (2.2.1) angeordnet ist.

## Revendications

1. Garniture de pavillon (1) comprenant un ensemble module électronique (2) pour véhicules comprenant :
• une garniture de pavillon (1) comprenant un premier côté (1.1) conçu pour faire face à un intérieur de véhicule en utilisation et un second côté (1.2) conçu pour faire face à un toit de véhicule en utilisation, dans laquelle la garniture de pavillon (1) comprend une surface principale (1.3),
• un ensemble module électronique (2) ayant :
o un cadre (2.1) relié au second côté (1.2) de la garniture de pavillon (1) par des premiers moyens de fixation (3),
o un module électronique (2.2) comprenant :
▪ une carte de circuit imprimé (2.2.1) connectée au cadre (2.1) par des seconds moyens de fixation (4), dans laquelle la carte de circuit imprimé (2.2.1) est agencée parallèlement à la surface principale (1.3) de la garniture de pavillon (1) et dans laquelle la carte de circuit imprimé (2.2.1) comprend un premier côté (2.2.1.1) tourné vers la garniture de pavillon (1) et un second côté (2.2.1.2) opposé au premier côté (2.2.1.1),
▪ un câblage électrique (2.2.2) et un connecteur électrique (2.2.3) configurés pour connecter la carte de circuit imprimé (2.2.1) à une électronique principale du véhicule,
dans laquelle le module électronique (2.2) a une température de jonction T_{J},
o une partie absorbant la chaleur (2.4) qui comprend un boîtier (2.4.1) comprenant un matériau thermoconducteur ayant une conductivité thermique supérieure à 0,1 W/m.K et un matériau à changement de phase (2.4.2) ayant un point de fusion dans la plage entre 70 % de la température de jonction T_{J} et 105 % de la température de jonction T_{J}, dans laquelle la partie absorbant la chaleur (2.4) est en contact avec la carte de circuit imprimé (2.2.1) et dans laquelle le boîtier (2.4.1) renferme le matériau à changement de phase (2.4.2),
o un capuchon de protection mécanique (2.3) agencé en tant que composant externe de l'ensemble module électronique (2), dans laquelle ledit capuchon de protection mécanique (2.3) recouvre les composants formant l'ensemble module électronique (2) se trouvant entre ledit capuchon de protection mécanique (2.3) et la garniture de pavillon (1).

2. Garniture de pavillon (1) comprenant un ensemble module électronique (2) pour véhicules selon la revendication 1, dans laquelle le capuchon de protection mécanique (2.3) comprend un matériau isolant thermique.

3. Garniture de pavillon (1) comprenant un ensemble module électronique (2) pour véhicules selon la revendication 2, dans laquelle la garniture de pavillon (1) comprend un substrat (1.4) et une couche décorative (1.5) et dans laquelle le matériau d'isolation thermique du capuchon de protection mécanique (2.3) comprend le même matériau que le substrat (1.4) de la garniture de pavillon (1).

4. Garniture de pavillon (1) comprenant un ensemble module électronique (2) pour véhicules selon la revendication 1, dans laquelle la partie absorbant la chaleur (2.4) comprend le capuchon de protection mécanique (2.3).

5. Garniture de pavillon (1) comprenant un ensemble module électronique (2) pour véhicules selon la revendication 1, dans laquelle la partie absorbant la chaleur (2.4) est agencée sur le premier côté (2.2.1.1) de la carte de circuit imprimé (2.2.1).

6. Garniture de pavillon comprenant un ensemble module électronique pour véhicules selon la revendication 1, dans laquelle la partie absorbant la chaleur (2.3) est agencée sur le second côté (2.2.1.2) de la carte de circuit imprimé (2.2.1).

7. Garniture de pavillon (1) comprenant un ensemble module électronique (2) pour véhicules selon l'une quelconque revendication 1, dans lequel la partie absorbant la chaleur (2.4) est agencée sur le second côté (2.2.1.2) de la carte de circuit imprimé (2.2.1) et une autre une partie absorbant la chaleur (2.5) est en contact avec le premier côté (2.2.1.1) de la carte de circuit imprimé (2.2.1).

8. Garniture de pavillon (1) comprenant un ensemble module électronique (2) pour véhicules selon la revendication 7, dans laquelle l'autre partie absorbant la chaleur (2.5) comprend un autre boîtier (2.5.1) comprenant un matériau thermoconducteur ayant une conductivité thermique supérieure à 0,1 W/m.K et un autre matériau à changement de phase (2.5.2) ayant un point de fusion dans la plage entre 70 % de la température de jonction (T_{J}) et 105 % de la température de jonction (T_{J}), dans laquelle le boîtier (2.5.1) renferme l'autre matériau à changement de phase (2.5.2).

9. Garniture de pavillon (1) comprenant un ensemble module électronique (2) pour véhicules selon l'une quelconque des revendications précédentes, dans laquelle le capuchon de protection mécanique (2.3) est relié au cadre (2.1) par des troisièmes moyens de fixation (5).

10. Garniture de pavillon (1) comprenant un ensemble module électronique (2) pour véhicules selon l'une quelconque des revendications précédentes, dans laquelle le cadre (2.1) comprend des cinquièmes moyens de fixation (7) conçus pour fixer le cadre (2.1) à un toit de véhicule (8).

11. Ensemble toit de véhicule (80) comprenant :
un toit de véhicule (8),
une garniture de pavillon (1) comprenant un ensemble module électronique (2) pour véhicules selon l'une quelconque des revendications précédentes.

12. Ensemble toit de véhicule (80) selon la revendication 11, dans lequel le toit de véhicule (8) comprend une tôle de toit (8.1) en métal et la tôle de toit (8.1) comprend une ouverture de toit (8.1.1) couverte par un capuchon en plastique (9) agencé au-dessus de l'ensemble module électronique (2) lorsque l'ensemble toit de véhicule (80) est utilisé.

13. Ensemble toit de véhicule (80) selon la revendication 12, dans lequel l'ensemble module électronique (2) est fixé à la tôle de toit de véhicule (8.1) autour de l'ouverture de toit (8.1.1) ou l'ensemble module électronique (2) est fixé au capuchon en plastique (9) ou l'ensemble module électronique (2) est fixé aux deux parties.

14. Ensemble toit de véhicule (80) selon l'une quelconque des revendications 12 ou 13, dans lequel le module électronique (2.2) comprend une antenne (10) conçue pour faire communiquer le véhicule avec l'extérieur du véhicule et dans lequel l'antenne (10) est agencée sur le second côté (2.2.1.2) de la carte de circuit imprimé (2.2.1).
